# EUROPEAN PATENT SPECIFICATION

(11) **EP 1 814 400 B1**
(45) Date of publication and mention of the grant of the patent: **26.02.2014**
(21) Application number: 05800203.1
(22) Date of filing: 01.11.2005
(51) Int. Cl.: A23D 7/01

(54) **LIQUID EDIBLE PRODUCTS AND METHODS OF STABILISING LIQUID EDIBLE PRODUCTS**
FLÜSSIGE LEBENSMITTELPRODUKTE UND VERFAHREN ZUR STABILISIERUNG VON FLÜSSIGEN LEBENSMITTELPRODUKTEN
PRODUITS COMESTIBLES LIQUIDES ET PROCEDES DE STABILISATION DE CEUX-CI

(30) Priority: 06.11.2004 GB 0424615
(43) Date of publication of application: 08.08.2007
(73) Proprietor: Morehands IP Limited, Esher Surrey KT10 9PN (GB)
(72) Inventor: MUSSAWIR-KEY, Frederick Wade, Sidcup, Kent DA15 7HL (GB)
(74) Representative: Womsley, Nicholas
(86) International application number: PCT/GB2005/004217
(87) International publication number: WO 2006/048630

(56) References cited:
- EP-A- 0 327 120
- EP-A- 0 402 090
- EP-A- 0 563 593
- US-A- 3 939 290
- US-A- 4 794 015
- US-B1- 6 461 661
- DATABASE WPI Section Ch, Week 198113 Derwent Publications Ltd., London, GB; Class D13, AN 1981-22365D XP002360055 & JP 56 011751 A (NISSHIN OIL MILLS LTD) 5 February 1981 (1981-02-05)
- DATABASE WPI Section Ch, Week 200456 Derwent Publications Ltd., London, GB; Class D11, AN 2004-575949 XP002360054 & JP 2004 222588 A (NIPPON OILS & FATS CO LTD) 12 August 2004 (2004-08-12)

## Description

The present invention, which is defined by the claims, relates to liquid edible products and methods of stabilising liquid edible products, and particularly but not exclusively to sprayable liquid edible products.

In order to enable liquid edible products, such as cooking oils, to be dispensed by means of, for example hand-held spray devices fitted with finger or trigger operated pumps (referred to hereinafter as finger pump actuated dispensers), with air pressure systems, compressed gases or low boiling point liquefied gases (referred to hereinafter as aerosol dispensers), or devices comprising a pressurised container in which a flexible impervious bag is filled with product, the product must be of a sprayable viscosity. Most oils are too viscous at normal ambient temperatures to be readily sprayable and so oils are often mixed with water to form emulsions of lower, more readily sprayable viscosities.

However, the natural characteristics of oils and water are such that their emulsions have a tendency to separate into oil and water phases. This can adversely affect the properties of the sprayed product and thus result in a limited product shelf life.

European Patent Application 0327120A relates to a process for producing rolled-in type emulsified fat and oil compositions. These are generally non-liquid compositions typically for folding into dough to produce certain types of pastries. These products are quite distinct from the sprayable products of the present application.

European Patent Application 0563593A relates to oil in water type emulsions, particularly for the production of whipped cream. Again, the compositions are quite different to the present invention, having considerably lower amounts of lecithin.

According to a first aspect of the present invention, there is provided a sprayable liquid edible product characterised in that the product comprises a first liquid component comprising water in an amount between 20 and 50% by weight, a second liquid component comprising edible oil in an amount between 40-75% by weight dispersed in the first liquid component to form an emulsion, an emulsifier comprising a sucrose ester or a functionally equivalent derivative thereof in an amount up to about 5% by weight and a non-stick agent included in the first liquid component being lecithin in the form of a liquid and/or solid lecithin or a modified, fractionated or otherwise treated lecithin in an amount 3% to 6% by weight of the product, the edible oil being liquid at between 20°C and 30°C.

The emulsifier preferably acts to form linkages, on a molecular scale, between the second liquid component and the first liquid component to maintain a generally uniform dispersion of the second liquid component in the first liquid component over a period of time, preferably at least fifty two weeks at temperatures up to 30°C. The emulsifier preferably has a hydrophilic-lipophilic balance (HLB) value of between 10 and 15. Preferably the emulsifier acts to impede movement of the second liquid component within the first liquid component. The second liquid component may comprise droplets dispersed within the first liquid component, and the emulsifier may act to inhibit coalescence of the droplets, and thereby stabilise the emulsion.

The first liquid component may be present in an amount between 20-50% by weight of the product, and preferably in an amount between 28%-40% by weight of the product. Desirably the water is present in an amount about 33.6% by weight of the product.

The non-stick agent may be provided in an amount about 3.5 to 4.5% and desirably 3.9% by weight of the product.

A second emulsifier may be provided in the liquid edible product. The second emulsifier may comprise the or a further non-stick agent.

Preferably the emulsifier facilitates stabilisation of the lecithin in the product, and preferably acts to prevent the lecithin from clumping and thereby facilitating the formation and stabilisation of the product.

The first liquid component may include a preservative. The preservative may be present in an amount up to about 8% by weight of the product, and desirably in an amount between about 4-5.5% by weight of the product. The preservative may be present in an amount 0.05-8% by weight of the product, and desirably about 4.2% by weight of the product. Preferably the preservative comprises approximately 8-14%, and desirably approximately 10% by volume of the first liquid component. The preservative may comprise alcohol, which may be ethyl alcohol, isopropyl alcohol and propylalcohol. The preservative may additionally or as an alternative comprise one or more of propanol and iso-propanol.

The second liquid component may be present in an amount between 40-75% by weight of the product, and desirably in an amount between 50-65% by weight of the product. Preferably the second liquid component is present in an amount about 57.2% by weight of the product. The edible oil may comprise vegetable oil, olive oil, corn oil, sunflower oil, cotton oil, rapeseed oil or the like.

The liquid edible product may further comprise one or more of antioxidant, preservatives, flavouring, chelating agent, plant extract, herb extract, other emulsifiers, thickeners, spice extracts, colouring, vinegar, butter milk, milk product, butter oil, oil fraction, dairy derivative, milk protein, vitamins.

The liquid edible product may contain tocopherol, preferably in an amount in the order of 0.1% by weight of the product.

The emulsifier may be present in an amount between about 0.15-1.5% by weight of the product. Preferably the emulsifier is present in an amount about 1.0% by weight of the product.

The product may be an emulsion for use as a sprayable cooking oil, a dressing such as a salad dressing, a flavouring or other edible product.

According to a second aspect of the present invention there is provided a method of producing a sprayable liquid edible product, characterised in that the method comprises forming an emulsion of a second liquid component comprising edible oil which is liquid at between 20°C and 30°C in an amount between 40-75% by weight in a first liquid component comprising water in an amount between 20 and 50% by weight, stabilising the emulsion by providing therein a sucrose ester or a functionally equivalent derivative thereof in an amount up to about 5% by weight and providing a non-stick agent included in the first liquid component and being lecithin in the form of a liquid and/or solid lecithin or a modified, fractionated or otherwise treated lecithin in an amount 3% to 6% by weight of the product.

According to a third aspect of the present invention, there is provided a dispensing container containing a sprayable liquid edible product as described above.

The container may be an aerosol dispenser. Alternatively the container may be a finger pump actuated dispenser, a trigger spray pump, or any other suitable spray dispenser.

Preferred embodiments of the present invention will now be described by way of example only.

The invention provides a liquid edible product, which includes edible oil for use as a quick release coating or shallow fry cooking oil.

The liquid edible product comprises generally a first liquid component and a second liquid component dispersed preferably in droplet form in the first liquid component to form an emulsion. The emulsion is of sprayable viscosity to enable the liquid edible product to be dispensed from a hand-held spray device, and includes a primary emulsifier which acts to reduce the surface tension between the first and second liquid components to stabilise the emulsion whilst maintaining the sprayability of the product.

In more detail according to one embodiment of the invention, the first liquid component comprises water which is preferably present in an amount about 33.6% by weight of the product. In alternative embodiments, the amount of water present is between 20-50% by weight of the product. The water may comprise purified water, potable water, spring water, mineral water, condensate, deionised, distilled, or may comprise other suitable edible water or any combination thereof.

In order to impart non-stick properties to the product, which are particularly desirable when the product is used as a quick release coating for cooking applications, a lecithin product, such as solid and/or liquid soya lecithin is provided in the emulsion. The lecithin product preferably comprises liquid soya lecithin present in an amount about 3.5% to 4.5% by weight of the liquid edible product. An amount of about 3.9% lecithin product has been found particularly preferable in the present example. Any lecithin product including lecithin derivatives, modified lecithins, treated lecithins and fractionated lecithins may be employed in an amount up to 10% by weight of the product.

The lecithin also has emulsifier properties and acts along with the primary emulsifier as will be described.

Advantageously, the first liquid component also includes a preservative in an amount 0.05% to 8% by weight of the product. In a preferred form the preservative is food grade ethyl alcohol present in an amount between 4.0 and 5.5% and desirably about 4.2% by weight of the product. Other suitable preservatives may be employed such as propylalcohol and iso-propylalcohol, either or both of which may be present as an alternative, or in addition, to the ethyl alcohol. In general, the preservative may be present in any amount up to about 8% by weight of the product.

The second liquid component comprises an edible oil, such as vegetable oil, olive oil, or the like, which is in a substantially liquid state at temperatures between 5°C and 110°C at normal atmospheric conditions of pressure, etc. Preferably the second liquid component is liquid at temperatures between 20°C and 30°C and preferably approximately room temperature. The edible oil is advantageously present in an amount about 57.2% by weight of the product, although it may be present in any amount between 40-75% by weight of the product.

Tocopherol is provided in an amount approximately 0.1% by weight of the composition. The tocopherol preferably acts as an antioxidant, slowing down the initiation stage of oxidation which can spoil the edible oil component.

In order to inhibit the natural tendency for the first and second liquid components of the emulsion to separate into discrete oil and water phases, the liquid edible product comprises a primary emulsifier which acts to reduce the surface tension between the first liquid component, namely the water, and the second liquid component, namely the edible oil. The primary emulsifier acts to form linkages, on a molecular scale, between the oil droplets and the first liquid component to prevent the oil droplets from coalescing thereby acting to stabilise the emulsion. Movement of the second liquid component, namely the oil, in the first liquid component is generally impeded. The viscosity of the resultant emulsion is not significantly increased by the emulsifier to ensure the product retains the desired sprayable characteristics, and therefore enables the liquid edible product to be reliably dispensed by spraying using conventional dispensing means.

The primary emulsifier preferably also acts to facilitate solubilisation or homogenous dispersion of the lecithin product and is therefore relatively hydrophilic in the emulsion. The hydrophilic-lipophilic (HLB) value is chosen to be between 10 and 15. The lecithin product itself has some emulsifier or stabilising effect on the emulsion as previously mentioned and the primary emulsifier's action on the lecithin product further improves the stability of the product.

A preferred primary emulsifier is a sucrose ester or a sucrose ester of a fatty acid which is desirably present in an amount about 1% by weight of the liquid edible product. The sucrose ester may however be present in any amount up to about 5% by weight of the product in the embodiments, provided that the emulsion remains of sprayable viscosity, as described above. Examples of suitable sucrose esters include those supplied by Stearinerie Dubois Fils, France under product name DUB SE 15S and by Sisterna B.V., The Netherlands under product name SISTERNA SP70/50. Sucrose esters suitable for use in accordance with the present invention have an HLB value of between 10 and 15.

In alternative embodiments, functionally equivalent derivatives of sucrose esters may be used as emulsifiers, either instead of or in addition to sucrose ester.

The products as described above remains generally homogenous for up to fifty two weeks at normal ambient room temperatures of between 15°C and 25°C on average, but up to 30°C.

The liquid edible product described above is produced by dispersing the lecithin product in the oil and then dispersing this in the first liquid component, namely the water, preservative and any other ingredients such as, vitamins, flavourings etc., to form an emulsion of sprayable viscosity, and providing therein the sucrose ester to stabilise the emulsion. Due to the action of the emulsifier the emulsion can be formed using relatively low energy techniques, such as, but not only, the use of a Silverson mixer. This provides for further advantage of the present invention.

For convenience of use, the liquid edible product is provided in a dispensing container in the form of a hand-held spray device. Either a finger pump actuated dispenser, an aerosol dispenser, a trigger pump or any other suitable spray dispenser both as described above, may be employed to dispense the product.

There Is thus provided a liquid edible product in accordance with the present invention which has improved stability characteristics compared to conventional cooking oils of sprayable viscosity, and which at the same time remains of a viscosity which enables it to be reliably dispensed from a hand-held spray device without substantially affecting the spray characteristics of the resultant sprayed product. By maintaining a substantially uniform dispersion of the second liquid component in the first liquid component over a period of time, the emulsion remains stable for longer periods than existing sprayable liquid edible products. For example, emulsion stability may be increased on average by three months, and indeed up to six months.

Although embodiments of the invention have been described in the preceding paragraphs, it should be appreciated that various modifications may be made without departing from the scope of the present invention as claimed. The lecithin product may comprise a physically or chemically modified lecithin or lecithin derivative, or may be liquid or powder lecithin product, or of any origin. The product may comprise any other suitable components, such as antioxidant, preservative, flavouring, chelating agent, plant extract, herb extract, other emulsifiers, thickeners, spice extracts, colouring, vinegar, butter milk, milk product, butter oil, oil fraction, dairy derivative, milk protein, vitamin.

## Claims

1. A sprayable liquid edible product **characterised in that** the product comprises a first liquid component comprising water in an amount between 20 and 50% by weight, a second liquid component comprising edible oil in an amount between 40-75% by weight dispersed in the first liquid component to form an emulsion, an emulsifier comprising a sucrose ester or a functionally equivalent derivative thereof in an amount up to about 5% by weight, and a non-stick agent included in the first liquid component and being lecithin In the form of a liquid and/or solid lecithin or a modified, fractionated or otherwise treated lecithin in an amount 3% to 6% by weight of the product, the edible oil being liquid at between 20°C and 30°C.

2. A liquid edible product according to claim 1, **characterised in that** the emulsifier has a hydrophilic-lipophilic balance (HLB) value of between 10 and 15.

3. A liquid edible product according to any preceding claim, **characterised in that** the first liquid component is present is an amount between 28%-40% by weight of the product.

4. A liquid edible product according to claim 3, **characterised in that** the water is present in an amount about 33.6% by weight of the product.

5. A liquid edible product according to any preceding claim, **characterised in that** the lecithin is present in an amount about 3.5 to 4.5%.

6. A liquid edible product according to any preceding claim, **characterised in that** a second emulsifier is provided in the liquid edible product.

7. A liquid edible product according to claim 6, **characterised in that** the second emulsifier comprises the or a further non-stick agent.

8. A liquid edible product according to any preceding claim, **characterised in that** the first liquid component includes a preservative.

9. A liquid edible product according to claim 8, **characterised in that** the preservative is present in an amount up to about 8% by weight of the product.

10. A liquid edible product according to claim 8 or claim 9, **characterised in that** the preservative is present in an amount between about 4-5.5% by weight of the product.

11. A liquid edible product according to any of claims 8 to 10, **characterised in that** the preservative comprises approximately 8-14% by volume of the first liquid component.

12. A liquid edible product according to any of claims 8 to 11, **characterised in that** the preservative comprises alcohol, such as ethyl alcohol, isopropyl alcohol propylalcohol, propanol and iso-propanol.

13. A liquid edible product according to any preceding claim, **characterised in that** the second liquid component is present in an amount between 50-65% by weight of the product.

14. A liquid edible product according to any preceding claim, **characterised in that** the second liquid component is present in an amount about 57.2% by weight of the product.

15. A liquid edible product according to any preceding claim, **characterised in that** the liquid edible product contains tocopherol.

16. A liquid edible product according to claim 15, **characterised in that** the tocopherol is present in an amount in the order of 0.1% by weight of the product.

17. A liquid edible product according to any preceding claim, **characterised in that** the emulsifier is present in an amount between about 0.15-1.5% by weight of the product.

18. A liquid edible product according to any preceding claim, **characterised in that** the emulsifier is present in an amount about 1.0% by weight of the product.

19. A method of producing a sprayable liquid edible product, **characterised in that** the method comprises forming an emulsion of a second liquid component comprising edible oil which is liquid at between 20°C and 30°C in an amount between 40-75% by weight in a first liquid component comprising water in an amount between 20 and 50% by weight, stabilising the emulsion by providing therein a sucrose ester or a functionally equivalent derivative thereof in an amount up to about 5% by weight and providing a non-stick agent included in the first liquid component and being lecithin in the form of a liquid and/or solid lecithin or a modified, fractionated or otherwise treated lecithin in an amount 3% to 6% by weight of the product.

20. A dispensing container **characterised in that** the container contains a sprayable liquid edible product as claimed in any of claims 1 to 18.

## Patentansprüche

1. Sprühbares flüssiges Verzehrprodukt, **dadurch gekennzeichnet, dass** das Produkt aufweist: eine erste flüssige Komponente, welche Wasser in einer Menge von 20 bis 50 Gew.% aufweist; eine zweite flüssige Komponente, welche Speiseöl in einer Menge von 40 bis 75 Gew.% dispergiert in der ersten flüssigen Komponente aufweist, um eine Emulsion zu bilden; einen Emulgator, welcher einen Sucrose-Ester oder ein funktionell äquivalentes Derivat davon in einer Menge von bis zu etwa 5 Gew.% aufweist; und ein Antihaftmittel, welches in der ersten flüssigen Komponente enthalten ist und bei welchem es sich um Lecithin in Form eines flüssigen und/oder festen Lecithins oder um ein modifiziertes, fraktioniertes oder anderweitig behandeltes Lecithin handelt, in einer Menge von 3 bis 6 Gew.% des Produktes; und wobei das Speiseöl zwischen 20°C und 30°C flüssig ist.

2. Flüssiges Verzehrprodukt nach Anspruch 1, **dadurch gekennzeichnet, dass** der Emulgator einen Hydrophil-Lipophil-Gleichgewichtswert (HLB-Wert) von 10 bis 15 aufweist.

3. Flüssiges Verzehrprodukt nach einem der vorhergehenden Ansprüche, **dadurch gekennzeichnet, dass** die erste flüssige Komponente in einer Menge von 28 bis 40 Gew.% des Produktes vorliegt.

4. Flüssiges Verzehrprodukt nach Anspruch 3, **dadurch gekennzeichnet, dass** das Wasser in einer Menge von etwa 33,6 Gew.% des Produktes vorliegt.

5. Flüssiges Verzehrprodukt nach einem der vorhergehenden Ansprüche, **dadurch gekennzeichnet, dass** das Lecithin in einer Menge von etwa 3,5 bis 4,5% vorliegt.

6. Flüssiges Verzehrprodukt nach einem der vorhergehenden Ansprüche, **dadurch gekennzeichnet, dass** ein zweiter Emulgator in dem flüssigen Verzehrprodukt vorgesehen ist.

7. Flüssiges Verzehrprodukt nach Anspruch 6, **dadurch gekennzeichnet, dass** der zweite Emulgator das oder ein weiteres Antihaftmittel aufweist.

8. Flüssiges Verzehrprodukt nach einem der vorhergehenden Ansprüche, **dadurch gekennzeichnet, dass** die erste flüssige Komponente ein Konservierungsmittel enthält.

9. Flüssiges Verzehrprodukt nach Anspruch 8, **dadurch gekennzeichnet, dass** das Konservierungsmittel in einer Menge von bis zu etwa 8 Gew.% des Produktes vorliegt.

10. Flüssiges Verzehrprodukt nach Anspruch 8 oder 9, **dadurch gekennzeichnet, dass** das Konservierungsmittel in einer Menge von etwa 4 bis 5,5 Gew.% des Produktes vorliegt.

11. Flüssiges Verzehrprodukt nach einem der Ansprüche 8 bis 10, **dadurch gekennzeichnet, dass** das Konservierungsmittel ungefähr 8 bis 14 Vol.% der ersten flüssigen Komponente aufweist.

12. Flüssiges Verzehrprodukt nach einem der Ansprüche 8 bis 11, **dadurch gekennzeichnet, dass** das Konservierungsmittel Alkohol, wie z.B. Ethylalkohol, Isopropylalkohol Propylalkohol, Propanol und Isopropanol aufweist.

13. Flüssiges Verzehrprodukt nach einem der vorhergehenden Ansprüche, **dadurch gekennzeichnet, dass** die zweite flüssige Komponente in einer Menge von 50 bis 65 Gew.% des Produktes vorliegt.

14. Flüssiges Verzehrprodukt nach einem der vorhergehenden Ansprüche, **dadurch gekennzeichnet, dass** die zweite flüssige Komponente in einer Menge von etwa 57,2 Gew.% des Produktes vorliegt.

15. Flüssiges Verzehrprodukt nach einem der vorhergehenden Ansprüche, **dadurch gekennzeichnet, dass** das flüssige Verzehrprodukt Tocopherol enthält.

16. Flüssiges Verzehrprodukt nach Anspruch 15, **dadurch gekennzeichnet, dass** das Tocopherol in einer Menge in der Grössenordnung von 0,1 Gew.% des Produktes vorliegt.

17. Flüssiges Verzehrprodukt nach einem der vorhergehenden Ansprüche, **dadurch gekennzeichnet, dass** der Emulgator in einer Menge von etwa 0,15 bis 1,5 Gew.% des Produktes vorliegt.

18. Flüssiges Verzehrprodukt nach einem der vorhergehenden Ansprüche, **dadurch gekennzeichnet, dass** der Emulgator in einer Menge von etwa 1,0 Gew.% des Produktes vorliegt.

19. Verfahren zum Herstellen eines sprühbaren flüssigen Verzehrproduktes, **dadurch gekennzeichnet, dass** das Verfahren die folgenden Schritte aufweist: Bilden einer Emulsion einer zweiten flüssigen Komponente, welche zwischen 20°C und 30°C flüssiges Speiseöl in einer Menge von 40 bis 75 Gew.% aufweist, in einer ersten flüssigen Komponente, welche Wasser in einer Menge von 20 bis 50 Gew.% aufweist; Stabilisieren der Emulsion durch Bereitstellen eines Sucrose-Esters oder eines funktionell äquivalenten Derivats davon in einer Menge von bis zu etwa 5 Gew.% in der Emulsion; und Bereitstellen eines Antihaftmittels, welches in der ersten flüssigen Komponente enthalten ist und bei welchem es sich um Lecithin in Form eines flüssigen und/oder festen Lecithins oder um ein modifiziertes, fraktioniertes oder anderweitig behandeltes Lecithin handelt, in einer Menge von 3 bis 6 Gew.% des Produktes.

20. Spenderbehälter, **dadurch gekennzeichnet, dass** der Behälter ein sprühbares flüssiges Verzehrprodukt gemäss einem der Ansprüche 1 bis 18 enthält.

## Revendications

1. Produit comestible liquide pulvérisable, **caractérisé en ce que** le produit comprend un premier composant liquide comprenant de l'eau en une quantité comprise entre 20 et 50% en poids, un deuxième composant liquide comprenant de l'huile comestible dans une quantité comprise entre 40 à 75 % en poids dispersée dans le premier composant liquide pour former une émulsion, d'un émulsifiant comprenant un ester de saccharose ou un de ses dérivé fonctionnellement équivalent en une quantité allant jusqu'à 5% en poids, et un agent anti-adhésif compris dans le premier composant liquide et étant de la lécithine sous la forme d'un liquide et / ou de la lécithine solide ou une lécithine modifiée, fractionnée ou autrement traitée en une quantité allant de 3% à 6% en poids du produit, l'huile comestible étant liquide à une température comprise entre 20°C et 30°C.

2. Produit comestible liquide selon la revendication 1, **caractérisé en ce que** l'émulsifiant a une valeur d'équilibre hydrophile-lipophile (HLB) comprise entre 10 et 15.

3. Produit comestible liquide selon l'une quelconque des revendications précédentes, **caractérisé en ce que** le premier composant liquide est présent en une quantité comprise entre 28 % et 40 % en poids du produit.

4. Produit comestible liquide selon la revendication 3, **caractérisé en ce que** l'eau est présente en une quantité d'environ 33,6 % en poids du produit.

5. Produit comestible liquide selon l'une quelconque des revendications précédentes, **caractérisé en ce que** la lécithine est présente en une quantité d'environ 3,5 à 4,5%.

6. Produit comestible liquide selon l'une quelconque des revendications précédentes, **caractérisé en ce qu'**un deuxième émulsifiant est présent dans le produit comestible liquide.

7. Produit comestible liquide selon la revendication 6, **caractérisé en ce que** le deuxième émulsifiant comprend l'agent anti-adhésif ou un agent anti-adhésif supplémentaire.

8. Produit comestible liquide selon l'une quelconque des revendications précédentes, **caractérisé en ce que** le premier composant liquide comprend un agent de conservation.

9. Produit comestible liquide selon la revendication 8, **caractérisé en ce que** l'agent de conservation est présent en une quantité allant jusqu'à environ 8% en poids du produit.

10. Produit comestible liquide selon la revendication 8 ou la revendication 9, **caractérisé en ce que** l'agent de conservation est présent en une quantité comprise entre environ 4 et 5,5 % en poids du produit.

11. Produit comestible liquide selon l'une quelconque des revendications 8 à 10, **caractérisé en ce que** l'agent de conservation comprend environ 8 à 14 % en volume du premier composant liquide.

12. Produit comestible liquide selon l'une quelconque des revendications 8 à 11, **caractérisé en ce que** l'agent conservateur comprend de l'alcool, tel que de l'alcool éthylique, de l'alcool isopropylique de l'alcool propylique, du propanol et de l'isopropanol.

13. Produit comestible liquide selon l'une quelconque des revendications précédentes, **caractérisé en ce que** le second composant liquide est présent en une quantité comprise entre 50 et 65 % en poids du produit.

14. Produit comestible liquide selon l'une quelconque des revendications précédentes, **caractérisé en ce que** le second composant liquide est présent en une quantité d'environ 57,2 % en poids du produit.

15. Produit comestible liquide selon l'une quelconque des revendications précédentes, **caractérisé en ce que** le produit comestible liquide contient du tocophérol.

16. Produit comestible liquide selon la revendication 15, **caractérisé en ce que** le tocophérol est présent en une quantité de l'ordre de 0,1% en poids du produit.

17. Produit comestible liquide selon l'une quelconque des revendications précédentes, **caractérisé en ce que** l'émulsifiant est présent en une quantité comprise entre environ 0.15 et 1,5 % en poids du produit.

18. Produit comestible liquide selon l'une quelconque des revendications précédentes, **caractérisé en ce que** l'émulsifiant est présent en une quantité d'environ 1,0 % en poids du produit.

19. Procédé de production d'un produit comestible liquide pulvérisable, **caractérisé en ce que** le procédé comprend les étapes consistant à former une émulsion d'un second composant liquide comprenant de l'huile comestible qui est liquide à une température comprise entre 20°C et 30°C en une quantité comprise entre 40 et 75 % en poids dans un premier composant liquide comprenant de l'eau en une quantité comprise entre 40 et 75 % en poids, stabiliser l'émulsion en y ajoutant un ester de saccharose ou un de ses dérivés fonctionnellement équivalent en une quantité allant jusqu'à 5% en poids, et fournir un agent anti-adhésif compris dans le premier composant liquide et qui est de la lécithine sous la forme d'un liquide et / ou de la lécithine solide ou une lécithine modifiée, fractionnée ou autrement traitée en une quantité allant de 3 % à 6% en poids du produit.

20. Récipient distributeur **caractérisé en ce que** le récipient contient un produit comestible liquide pulvérisable selon l'une quelconque des revendications 1 à 18.
